# EUROPÄISCHE PATENTSCHRIFT

(11) **EP 2 489 566 B1**
(45) Veröffentlichungstag und Bekanntmachung des Hinweises auf die Patenterteilung: **03.09.2025**
(21) Anmeldenummer: 12000959.2
(22) Anmeldetag: 15.02.2012
(51) Int. Cl.: B60W 30/12, B62D 15/02

(54) **Verfahren zur Unterstützung eines Fahrers eines Fahrzeuges, insbesondere eines Kraft- oder Nutzfahrzeuges**
Method for supporting a driver of a vehicle, in particular a motor vehicle or commercial vehicle
Procédé d'assistance d'un conducteur de véhicule, notamment d'un véhicule automobile ou utilitaire

(30) Priorität: 18.02.2011 DE 102011011714
(43) Veröffentlichungstag der Anmeldung: 22.08.2012
(73) Patentinhaber: MAN Truck & Bus SE, 80995 München (DE); Technische Universität München, 80333 München (DE)
(72) Erfinder: Heyes, Daniel, 80687 München (DE); Tigges, Gunnar, 80992 München (DE); Schwertberger, Walter, 82278 Althegnenberg (DE); Resch, Christoph, 80637 München (DE); Dörner, Karlheinz, 85757 Karlsfeld (DE); Hipp, Eberhard, 80797 München (DE)
(74) Vertreter: v. Bezold & Partner Patentanwälte - PartG mbB

(56) Entgegenhaltungen:
- EP-A2- 2 284 057
- WO-A1-2004/108466
- DE-A1- 10 311 518
- DE-A1- 10 322 458
- DE-A1- 102008 010 631
- DE-A1- 102008 056 343
- US-A1- 2010 182 139

## Beschreibung

Die Erfindung betrifft ein Verfahren zur Unterstützung eines Fahrers eines Fahrzeuges, insbesondere eines Kraft- oder Nutzfahrzeuges, nach dem Oberbegriff des Anspruchs 1.

Die stetig steigende Verkehrsdichte und die damit verbundenen häufig wechselnden Rollgeschwindigkeiten erfordern ständig hohe Aufmerksamkeit vom Fahrer, insbesondere vom Fahrer von Nutzfahrzeugen. Es gibt deshalb mittlerweile verschiedene Assistenzsysteme, die den Fahrer während des Fahrbetriebs unterstützen können. Derartige Fahrerassistenzsysteme dienen insbesondere zur Entlastung des Fahrers in kritischen Fahrsituationen. Dabei wird regelmäßig mittels elektronischer Zusatzeinrichtungen vor einer Gefahrensituation gewarnt (passive Systeme) oder aber auch aktiv in die Fahrzeugbedienung bzw. in den Fahrzeugbetrieb eingegriffen.

Beispielsweise sind fahrdynamische Assistenzfunktionen bekannt, die den Fahrer bei der Quer- bzw. Spurführung des Fahrzeugs durch aktive Lenkeingriffe unterstützen. Dafür werden die Fahrstreifenbegrenzungslinien durch geeignete Erkennungseinrichtungen erkannt und in Abhängigkeit von der Position des Fahrzeuges im Fahrstreifen aktive Lenkeingriffe vorgenommen, die das Fahrzeug in einem gewünschten Maße im Fahrstreifen halten bzw. ein ungewolltes Verlassen des Fahrstreifens verhindern. In diesem Zusammenhang sind unterschiedliche Ausführungen der aktiven Lenkeingriffe in Abhängigkeit von der Fahrzeugposition innerhalb des Fahrstreifens bekannt. So erfolgt gemäß einer ersten Ausführungsform die aktive Lenkunterstützung erst im Bereich der Fahrstreifenbegrenzung und verhindert ein weiteres ungewolltes Abkommen vom Fahrstreifen (randzentrierte Lenkunterstützung). Befindet sich in diesem Fall das Fahrzeug innerhalb des Fahrstreifens, so erfolgen keine aktiven Lenkeingriffe. Bei einer anderen Ausführungsform wird das Fahrzeug durch aktive Lenkeingriffe entlang einer Ideallinie geführt (kontinuierliche Querführung). Der Fahrer muss selbst kein zusätzliches Lenkmoment aufbringen.

Nachteilig bei den vorstehend bekannten Verfahrensführungen zur Unterstützung eines Fahrers eines Fahrzeuges ist jedoch, dass diese jeweils fest vorgegeben sind bzw. der Grad der Unterstützung vom Fahrer nur fest durch manuelle Einstellung gewählt werden kann. Dies wird jedoch nicht sämtlichen Fahrsituationen gerecht.

Weiterhin ist es im Stand der Technik bekannt, Parameter bzw. Schwellenwerte von Fahrerassistenzsystemen in Abhängigkeit eines aktuellen Fahrerzustands, beispielsweise dessen Achtsamkeit und/oder Schläfrigkeit, zu adaptieren.

So offenbart z. B. die Offenlegungsschrift DE 103 11 518 A1 ein Verfahren zur Reaktion bei Verlassen der Fahrspur, wobei ein Warnen des Fahrers bzw. ein Eingriff in den Fahrbetrieb in Abhängigkeit eines - aus der Lenkradbewegung, der Kopfhaltung und/oder der Gaspedalbewegung abgeleiteten - Aufmerksamkeitszustands des Fahrers erfolgt.

Ferner sind auch aus der WO 2004/108466 A1 und DE 10 2008 056343 A1 Verfahren bekannt, bei welchen ebenfalls in Abhängigkeit eines erfassten Grads der Unachtsamkeit des Fahrers gegenüber Fahrzeugfahrtaufgaben ein Steuern eines Teilsystems eines Fahrzeugs erfolgt bzw. ein Warnsystem in Abhängigkeit des erfassten Aufmerksamkeitsgrads angesteuert wird.

Die US 2010/182139 A1 offenbart in diesem Zusammenhang ein Spurhaltewarnverfahren, bei dem die Warnung vor dem Verlassen einer Fahrspur unter Berücksichtigung eines Müdigkeitsindexes des Fahrers durchgeführt wird. Und auch aus der EP 2 284 057 A1 ist bekannt, eine auf einer Erkennung der Blickrichtung des Fahrers basierten Adaptierung von einem oder mehreren Parametern eines Fahrerassistenzsystems vorzunehmen.

Allen vorgenannten Verfahren ist allerdings gemein, dass die Adaption jeweils lediglich in Abhängigkeit eines aktuellen Ist-Fahrerzustands erfolgt. Eine Berücksichtigung einer äußeren Fahrerbelastung, welche sich langfristig auf den zukünftigen Fahrerzustand auswirken kann, ist hierbei nicht vorgesehen.

Aus der DE 103 22 458 A1 ist ferner ein Verfahren zur Beeinflussung der Beanspruchung eines Fahrers während einer Fahrt bekannt, bei dem aus sensorisch erfassten physiologischen Daten des Fahrers ein Beanspruchungswert ermittelt wird. Basierend auf diesem Beanspruchungswert werden Fahrzeugsysteme derart angesteuert, dass der Fahrer über seine visuellen, auditiven oder haptischen Sinneskanäle derart beeinflusst wird, dass dessen Beanspruchungswert einen optimalen Bereich einnimmt.

Es ist daher Aufgabe der vorliegenden Erfindung, ein Verfahren zur Unterstützung eines Fahrers eines Fahrzeuges, insbesondere eines Kraft- oder Nutzfahrzeuges, zur Verfügung zu stellen, mittels der die Fahrerunterstützung noch weiter verfeinert und optimiert werden kann.

Diese Aufgabe wird gelöst mit den Merkmalen des Patentanspruchs 1. Vorteilhafte Ausgestaltungen hierzu sind Gegenstand der darauf rückbezogenen Unteransprüche.

Gemäß Anspruch 1 wird ein Verfahren zur Unterstützung eines Fahrers eines Fahrzeuges, insbesondere eines Kraft- oder Nutzfahrzeuges, vorgeschlagen, bei dem wenigstens ein Fahrerassistenzsystem bei Erreichen eines definierten Aktivierungsschwellwertes in den Fahrbetrieb eingreift, insbesondere aktiv in den Fahrbetrieb eingreift. Erfindungsgemäß wird vorgeschlagen, dass der Aktivierungsschwellwert des wenigstens einen Fahrerassistenzsystems und damit das Eingriffsverhalten desselben in Abhängigkeit von einer mittels einer Erkennungs- und/oder Auswerteeinrichtung erfassten Fahrerbelastung vorgegeben bzw. adaptiert wird. Alternativ oder zusätzlich wird erfindungsgemäß vorgeschlagen, dass der Aktivierungsschwellwert des wenigstens einen Fahrerassistenzsystems und damit das Eingriffsverhalten desselben in Abhängigkeit von einem mittels einer Erkennungs- und/oder einer Auswerteeinrichtung erfassten Fahrerzustand vorgegeben bzw. adaptiert wird.

Mit einer derartigen erfindungsgemäßen Verfahrensführung gelingt eine wesentlich bessere, auf die jeweilige Fahr- bzw. Verkehrssituation angepasste Fahrerunterstützung, die vor allem auch die Fahrerbelastung bzw. alternativ oder zusätzlich auch den Fahrerzustand berücksichtigt und somit genau die für die jeweilige Fahr- und Verkehrssituation auf den Fahrer abgestimmte Unterstützung bereitstellen kann. Dadurch lässt sich die Sicherheit des Fahrzeugbetriebs insgesamt wesentlich steigern, da zum Beispiel die Fahrerbelastung genau in einem erwünschten Belastungsbereich gehalten werden kann, bei dem der Fahrer die höchste Aufmerksamkeit bzw. die höchste Konzentration aufweist, während zum anderen die Fahrerassistenzsysteme in technisch optimaler Weise genau zum richtigen Zeitpunkt mit der richtigen Dosierung eingesetzt werden.

Erfindungsgemäß wird vorgeschlagen, dass eine aktuelle, fahrerunabhängige Fahr- und/oder Verkehrssituation im Wesentlichen als momentane, externe Fahrerbelastung mittels der Erkennungs- und/oder Auswerteeinrichtung erfasst und eine Kenngröße für den Grad der Fahrerbelastung ermittelt wird, wobei der Aktivierungsschwellwert und damit das Eingriffsverhalten des wenigstens eines Fahrerassistenzsystems, insbesondere eines Quer- oder Spurführungssystems, in Abhängigkeit vom Grad der ermittelten Fahrerbelastung optimal vorgegeben bzw. adaptiert werden kann. Die zur Ermittlung der momentanen, externen Fahrerbelastung erfassbaren Parameter als die aktuelle, fahrerunabhängige Fahr- und/oder Verkehrssituation widerspiegelnde Messgrößen können dabei zum Beispiel die Fahrstreifenbreite und/oder der Straßenverlauf und/oder eine Verkehrsdichte und/oder eine Verkehrsdynamik (Verkehrsfluss, Anzahl der Fahrzeuge, Fahrgeschwindigkeit, etc.) und/oder die Straßenbeschaffenheit und/oder die Tageszeit und/oder das Wetter sein, ohne dass diese Aufzählung bereits als abschließend anzusehen wäre. Mit einer derartigen konkreten Verfahrensführung kann somit die Fahrerbelastung einer definierten, aktuellen Fahr- und/oder Verkehrssituation als Beurteilungswert aus der Fahrsituationscharakteristik abgeleitet und das Eingriffsverhalten des Fahrerassistenzsystems, hier: einer aktiven Lenkunterstützung eines Quer- oder Spurführungssystems, skaliert werden. Erfindungsgemäß erfolgt somit die Anpassung des Eingriffsverhaltens der aktiven Lenkunterstützung in Abhängigkeit der Fahrerbelastung in einer definierten, aktuell erfassten Fahr- bzw. Verkehrssituation.

Bei den Kenngrößen für den Grad der Fahrerbelastung wird dabei wenigstens zwischen einer unerwünschten Fahrerbelastung und einer erwünschten Fahrerbelastung (Situationsklassifikation) unterschieden, und zwar insbesondere dergestalt, dass bei einer unerwünschten Fahrerbelastung der Aktivierungsschwellwert für das Fahrerassistenzsystem jeweils so adaptiert wird, dass das wenigstens eine Fahrerassistenzsystem eine solche Unterstützung bewirkt, die eine Fahrerbelastung im erwünschten Bereich zur Folge hat. Erfindungsgemäß ist eine dreistufige Klassifikation von Fahr- bzw. Verkehrssituationen, die je nach Bedarf und Erkennungsgüte erweitert werden kann, vorgesehen, wobei abhängig von der Beanspruchung des Fahrers, die sich aus der jeweiligen Fahr- bzw. Verkehrssituation ergibt, drei Situationsklassen unterschieden werden
a) eine hohe Fahrerbelastung, die aus einer komplexen, stark belastenden Fahrsituation resultiert. Eine derartige hohe Fahrerbelastung stellt für den Fahrer eine hohe Fahrbeanspruchung dar.
b) eine mittlere Fahrerbelastung, die aus einer demgegenüber weniger komplexen, mittelmäßig belastenden Fahrsituation resultiert. Diese Art der Fahrerbelastung führt zu einer mittleren, erwünschten Fahrerbeanspruchung, bei der die Konzentration des Fahrers am höchsten ist.
c) Eine geringe Fahrerbelastung die aus einer zum Beispiel monotonen, sehr wenig belastenden Fahr- bzw. Verkehrssituation resultiert. Eine derartige geringe Fahrerbelastung stellt für den Fahrer ebenfalls eine unerwünscht hohe Fahrerbeanspruchung dar, da der Fahrer in der reizarmen Fahrumgebung konzentriert das Fahrzeug führen muss, die reizarme Fahrumgebung jedoch insbesondere über einen längeren Zeitraum die Konzentration bzw. Aufmerksamkeit schwinden lässt.

Mit der zuvor beschriebenen erfindungsgemäßen Verfahrensführungsvariante kann somit auf einfache Weise sichergestellt werden, dass die jeweilige Fahrerbelastung bei der Unterstützung durch ein Fahrerassistenzsystem berücksichtigt wird und dementsprechend der Grad der Unterstützung durch das Fahrerassistenzsystem entsprechend an die jeweilige Situation angepasst werden kann, was bei den bekannten, starren Systemen des gattungsbildenden Standes der Technik nicht der Fall ist. Erfindungsgemäß ist in Verbindung mit einem Fahrerassistenzsystem, welches ein aktiv in den Fahrbetrieb eingreifendes Quer- oder Spurführungssystem ist, vorgesehen, dass dessen auf die Lenkung des Fahrzeuges wirkendes Lenkmoment in Abhängigkeit von der für den Grad der Fahrerbelastung ermittelten Kenngröße dergestalt adaptiert wird, dass bei einer unerwünschten hohen Fahrerbelastung eine kontinuierliche Querführung über die gesamte Fahrstreifenbreite entlang einer definierten Ideallinie erfolgt, während bei einer erwünschten, vorzugsweise mittleren Fahrerbelastung dann nur eine bezogen auf die Fahrstreifenbreite randzentrierte Querführung erfolgt. Das heißt somit, dass der Unterstützungsgrad durch das Fahrerassistenzsystem im Falle der mittleren Fahrerbelastung gegenüber der definiert höheren Fahrerbelastung reduziert wird, so dass nur noch die randzentrierte Lenkunterstützung zur Verfügung steht. Das heißt mit anderen Worten, dass der Fahrer dann das Fahrzeug selbst auf der Ideallinie führen muss und ein Eingriff des Fahrerassistenzsystems nur dann erfolgt, wenn sich das Fahrzeug ungewollt der Fahrstreifenbegrenzung nähert.

Bei einer unerwünschten niedrigen Fahrerbelastung wird die Fahrerbelastung wiederum bis zu einer erwünschten, vorzugsweise mittleren Fahrerbelastung erhöht. Hierfür stehen verschiedene Maßnahmen zur Verfügung:
Erfindungsgemäß wird, sofern die kontinuierliche Quer- oder Spurführung das Fahrzeug entlang einer Ideallinie führt, diese Ideallinie innerhalb des Fahrstreifens durch eine zeitliche und/oder situative Steuerung zufallsbasiert oder regelbasiert weiter nach links oder rechts verlegt, so dass das Fahrzeug entsprechend seine Lage im Fahrstreifen regelmäßig verändert.

Zusätzlich kann auch vorgesehen sein, dass das Querführungssystem die Art der Fahrerassistenzsystem-Unterstützung zeitgesteuert (fix oder variabel) oder basierend auf einer zuvor dargestellten Situationsklassifikation und/oder einer nachfolgend noch näher erläuterten Fahrerzustandsklassifikation verändert. Die Fahrerassistenzsystem-Unterstützung umfasst dabei zum Beispiel mindestens eine Ausgestaltung der Querführungsunterstützung nämlich wenigstens das Verhindern des Abkommens von der Fahrspur durch randzentrierte Lenkunterstützung und/oder das Führen des Fahrzeugs entlang einer Ideallinie durch kontinuierliche Querführung.

Alternativ oder zusätzlich ist erfindungsgemäß vorgesehen, dass in Verbindung mit einem zusätzlich zu dem Quer- oder Spurführungssystem vorhandenem Längsführungssystem als Fahrerassistenzsystem der Abstand zum vorausfahrenden Fahrzeug in einem definierten Maße wiederholt verändert wird. Dies kann zum Beispiel dergestalt erfolgen, dass der eingeregelte Abstand zeitgesteuert (fix oder variabel) oder basierend auf einer zuvor beispielhaft erläuterten Situationsklassifikation und/oder einer nachfolgend noch näher erläuterten Fahrerzustandsklassifikation verändert wird, wodurch ein kürzerer bzw. weiterer Abstand erhalten wird, mittels dem das visuelle Situationsbild des Fahrers in monotonen Fahrsituationen verändert werden kann. Außerdem entstehen hierbei durch die Beschleunigung bzw. Verzögerung des Fahrzeugs bei der Abstandsveränderung weitere Reize, die kinästhetisch bzw. haptisch auf den Fahrer einwirken.

Alle diese eben beschriebenen Maßnahmen dienen somit einzeln oder in beliebiger Kombination miteinander dazu, den Fahrer durch regelmäßige Reize zu einer Interaktion zu zwingen, insbesondere in einer zum Beispiel ansonsten reizarmen, monotonen Fahr- bzw. Verkehrssituation zur Interaktion zu zwingen, und dadurch seine Aufmerksamkeit auf die Fahraufgabe zu lenken bzw. Informationen darüber zu erlangen, ob er noch eine ausreichende Reaktionsfähigkeit besitzt.

Gemäß einer besonders bevorzugten Verfahrensführung ist vorgesehen, dass der Fahrer von der wenigstens einen bevorstehenden Maßnahme zur Erhöhung der Fahrerbelastung fahrzeugseitig mittels einer Informationseinrichtung informiert wird. Alternativ oder zusätzlich dazu kann einem Fahrer, der von der bevorstehenden Maßnahme zur Erhöhung der Fahrerbelastung mittels einer fahrzeugseitigen Informationseinrichtung unterrichtet ist, mittels der Informationseinrichtung aber auch eine Wahlmöglichkeit angeboten werden, durch entsprechende Befehlseingabe die zusätzliche Fahrerbelastung zu unterbinden und/oder zuzulassen. Das heißt somit, dass der Fahrer über eine Mensch-Maschine-Schnittstelle über eine bevorstehende Umschaltung, die in der Grundauslegung durch das Fahrerassistenzsystem vorgegeben ist bzw. durchgeführt wird, rechtzeitig informiert wird. Weiter kann vorgesehen sein, dass der Fahrer durch eine Eingabemöglichkeit die bevorstehende Umschaltung der zum Beispiel Quer- oder Spurführungsunterstützung verhindern kann bzw. diese selber zu einem anderen Zeitpunkt vornehmen kann. Das Fahrerassistenzsystem kann jedoch die zur Verfügung stehenden Arten der Querführungsunterstützung basierend auf einer Situationsklassifikation und/oder einer Fahrerzustandsklassifikation gegebenenfalls einschränken.

Zwischen den jeweiligen Eingriffsmodi kann zum Beispiel direkt umgeschaltet werden. Alternativ kann aber auch ein stufiger oder ein fließender, stetiger Übergang stattfinden. Bei einer kontinuierlichen Quer- oder Spurführung kann zum Beispiel eine Rücklenkcharakteristik bzw. ein Lenkmoment stufenlos bis zur randzentrierten Lenkunterstützung variiert werden. Weiter kann die Fahrerbelastung auch dahingehend gesteigert werden, dass die einzelnen Maßnahmen zur Erhöhung der Fahrerbelastung schrittweise hinzugefügt werden.

In Verbindung mit der vorstehend beschriebenen Vorgabe bzw. Adaption des Aktivierungsschwellwertes eines Fahrerassistenzsystems, insbesondere eines Quer- oder Spurführungssystems, ist es somit besonders vorteilhaft, dass der Grad der Fahrerunterstützung mittels des wenigstens einen Fahrerassistenzsystems an die jeweilige Fahr- bzw. Verkehrssituation in Abhängigkeit von einer Fahrerbelastung adaptiert wird, wobei es das bevorzugte Ziel ist, dass der Fahrer dauerhaft gesehen mittelmäßig beansprucht wird, das heißt einer mittleren Fahrerbelastung ausgesetzt ist, die dem optimalen menschlichen Leistungsbereich entspricht.

Ein weiterer Beurteilungswert, mittels dem der Aktivierungsschwellwert des wenigstens einen Fahrerassistenzsystems vorgegeben bzw. adaptiert werden kann, ist der bereits vorstehend erwähnte Fahrerzustand, womit insbesondere die Fahreraufmerksamkeit bzw. die Fahrer-Vigilanz gemeint ist. Denn während die zuvor beschriebene Situationsklassifikation im Wesentlichen hauptsächlich die momentane, externe Belastung des Fahrers berücksichtigt, werden über die Beurteilung des Fahrerzustandes auch langfristige Veränderungen in der Leistungsfähigkeit des Fahrers erfassbar und damit abgebildet. Das heißt somit, dass wenigstens ein das Fahrverhalten des Fahrers und/oder den Fahrer selbst beeinflussender und/oder charakterisierender Parameter und/oder wenigstens ein vom Fahrer mittelbar oder unmittelbarer beeinflussbarer Parameter als fahrerspezifische Messgröße mittels der Erkennungs- und/oder Auswerteeinrichtung erfasst werden kann, um eine Kenngröße für den Fahrerzustand zu ermitteln. In diesem Fall wird dann der Aktivierungsschwellwert und damit das Eingriffsverhalten des wenigstens einen Fahrerassistenzsystems, insbesondere eines Quer- oder Spurführungssystems, in Abhängigkeit vom ermittelten Fahrerzustand vorgegeben bzw. adaptiert.

Die Besonderheit dieser spezifischen Verfahrensführung liegt darin, dass dieser Beurteilungswert relativ robust abgeleitet werden kann, auch wenn verschiedene herangezogene Messgrößen zeitweise nicht verfügbar sind. Zum einen kann hier auf Messgrößen zurückgegriffen werden, wie zum Beispiel den Lenk- bzw. den Lenkradwinkel, die zum Beispiel das Lenkverhalten widerspiegeln, oder aber auch auf eine Betätigungscharakteristik definierter Pedale zurückgegriffen werden. Diese Messgrößen sind regelmäßig nur dann als Messgrößen verfügbar, wenn keine Unterstützungseingriffe durch ein Fahrerassistenzsystem, wie zum Beispiel ein Quer- oder Spurführungssystem und/oder ein Längsführungssystem (ACC) vorliegen. Hier gibt es bereits vorbekannte Verfahren, wie zum Beispiel das sogenannte SWRR (Steering Wheel Reversal Rate), die aus den Einzelsignalen jeweils Abschätzungen des Fahrerzustandes berechnen bzw. einer Interpretation zugänglich machen. Zum anderen können Signale herangezogen werden, wie zum Beispiel eine Spurablage, Tastendrücke des Fahrers, Blick-/Kopfrichtungserfassungen, physiologische Messwerte, wie zum Beispiel ein Hautleitwert oder dergleichen, die aus einer Sensorik gewonnen werden, die wiederum bevorzugt unabhängig von Unterstützungseingriffen eines Fahrerinformationssystems sind. Des Weiteren können zur Abschätzung des Fahrerzustands auch die Fahrdauer, die Dauer der klassifizierten Fahrsituation, Pausenzeiten, der Circadianer-Rhythmus (Abschätzung des grundlegenden Leistungsvermögens des Fahrers), Tageszeit, Wetter, etc. herangezogen werden. Diese genannten Gruppen von Signalen werden zum Beispiel über Übertragungsfunktionen bewertet und anschließend zum Beispiel über Gewichtungsfaktoren oder neuronale Netze zu einem Beurteilungswert bzw. einer Kenngröße zusammengefasst. Diese Kenngröße steht dann jederzeit zur Verfügung, um den Aktivierungsschwellwert des wenigstens einen Fahrerassistenzsystems in der zuvor beschriebenen Weise vorzugeben bzw. anzupassen bzw. zu adaptieren.

Obwohl die Adaption des Fahrerassistenzsystems bevorzugt lediglich auf Basis der Kenngröße der Fahrerbelastung vorgenommen wird, kann gemäß einer weiteren bevorzugten Ausgestaltung grundsätzlich auch vorgesehen sein, dass die Kenngröße der Fahrerbelastung und die Kenngröße des Fahrerzustands zur Vorgabe bzw. Adaption des Aktivierungsschwellwertes des Fahrerassistenzsystems und damit dessen Eingriffsverhalten herangezogen werden. In diesem Fall ist es dann erforderlich, dass die beiden Kenngrößen zum Beispiel mittels der Erkennungs- und Auswerteinrichtung in einem definierten Maße korreliert werden und somit eine gemeinsame Kenngröße ermittelt wird, anhand der der Aktivierungsschwellwert und damit das Eingriffsverhalten des wenigstens einen Fahrerassistenzsystems vorgegeben bzw. adaptiert wird.

Gemäß einer besonders bevorzugten Verfahrensführung wird weiterhin vorgeschlagen, dass bei einer insbesondere im Hinblick auf die Aufmerksamkeit und/oder die Vigilanz erfassten Verschlechterung eines erwünschten, definierten Fahrerzustandes vorgesehen wird, dass eine Ideallinie, entlang der das Fahrzeug mittels eines Quer- oder Spurführungssystems als Fahrerassistenzsystem spurgeführt ist, innerhalb des Fahrstreifens in einem definierten Maße verlegt wird und/oder dass die Unterstützung durch das wenigstens eine Fahrerassistenzsystem in einem vorgegebenen Maße dergestalt reduziert wird, dass der Fahrer in einem verstärkten Maße aktiv in das Fahrgeschehen eingreifen muss. Das heißt, dass bei abnehmender Vigilanz, jedoch durchaus vorhandener körperlicher Fitness, die als Verschlechterung des Fahrerzustandes erkannt wird, die Unterstützung durch das jeweilige bzw. die jeweiligen Fahrerassistenzsystem(e) zurückgenommen wird, um den Fahrer stärker in die Fahraufgabe einzubinden, was dessen Aufmerksamkeit und Konzentration fördert bzw. steigert, ähnlich wie dies zuvor in Verbindung mit der niedrigen Fahrerbelastung beschrieben worden ist.

Auch hier ist wiederum bevorzugt vorgesehen, dass der Fahrer von der bevorstehenden Maßnahme der Verlegung der Ideallinie und/oder der Reduzierung der Fahrerunterstützung fahrzeugseitig mittels einer Informationseinrichtung informiert wird und/oder dass einem von der bevorstehenden Maßnahme mittels einer fahrzeugseitigen Informationseinrichtung unterrichteten Fahrer mittels der Informationseinrichtung weiter eine Wahlmöglichkeit angeboten wird, durch entsprechende Befehlseingabe die Verlegung der Ideallinie und/oder die Reduzierung der Fahrerunterstützung zu unterbinden und/oder zuzulassen. Alternativ oder zusätzlich dazu kann dem Fahrer mittels einer Informationseinrichtung auch angezeigt werden, dass seine Leistungsfähigkeit abnimmt und/oder dass eine Pause einzulegen ist. In diesem Zusammenhang kann auch vorgesehen sein, dass diese Maßnahmen vom Fahrerassistenzsystem nur zeitlich begrenzt zur Verfügung gestellt werden, und zwar mit der Maßgabe, dass der Fahrer baldmöglichst das Fahrzeug abstellt und eine Pause einlegt; anderenfalls kann zum Beispiel das Fahrerassistenzsystem definierte Notlaufeigenschaften vorgeben, die den Fahrbetrieb, insbesondere zum Beispiel dessen Fahrgeschwindigkeit, so beeinflussen, dass der Fahrer gezwungen wird, die erforderliche Pause einzulegen.

Auch in Verbindung mit einem festgestellten verschlechterten Fahrerzustand kann wiederum, wie bereits zuvor in Verbindung mit der Fahrerbelastung geschildert, vorgesehen sein, dass bei Quer- oder Spurführungssystem mitsamt Längsführungssystem der Abstand zum vorausfahrenden Fahrzeug in einem definiertem Maße wiederholt verändert wird. Bezüglich weiterer Einzelheiten wird auf die zuvor in Verbindung mit der Fahrerbelastung gemachten Ausführungen verwiesen.

Gemäß einer weiteren besonders bevorzugten Verfahrensführung kann zusätzlich auch vorgesehen sein, dass die die Aufmerksamkeit bzw. die Konzentration erhöhenden Maßnahmen, wie sie vorstehend in Verbindung mit der Ermittlung der Fahrerbelastung bzw. der Ermittlung des Fahrerzustandes beschrieben worden sind, auch unabhängig von einer Erfassung und Klassifikation der Fahrerbelastung bzw. des Fahrerzustandes vorgesehen bzw. mittels des Fahrerassistenzsystems vorgegeben werden können, da dadurch der Zustand des Fahrers grundsätzlich positiv beeinflusst werden kann.

Des Weiteren kann insbesondere in Verbindung mit einer Kopplung eines Quer- oder Spurführungssystems als Fahrerassistenzsystem mit einem Längsführungssystem als weiteren Fahrerassistenzsystem vorgesehen sein, dass als Sicherheitsmaßnahme eine eingestellte Set-Geschwindigkeit des Längsführungssystems schrittweise reduziert wird, wenn beispielsweise in Verbindung mit der Erfassung eines Fahrerzustandes erfasst wird, dass die Hände des Fahrers über einen definierten Zeitraum nicht in Kontakt mit dem Lenkrad sind.

Die vorstehend erläuterten und/oder in den Unteransprüchen wiedergegebenen vorteilhaften Aus- und Weiterbildungen der Erfindung können dabei, außer zum Beispiel in den Fällen eindeutiger Abhängigkeiten oder unvereinbarer Alternativen, einzeln oder aber auch in beliebiger Kombination miteinander zur Anwendung kommen.

Die Erfindung wird nachfolgend anhand einer beispielhaften Ausführungsform näher erläutert: Nachfolgend wird ein Quer- oder Spurführungssystem dargestellt, bei dem das Eingriffsverhalten an die Fahrerbelastung angepasst werden kann.

Die Anpassung des Aktivierungsschwellwertes und damit des Unterstützungsgrades des Quer- oder Spurführungssystems erfolgt dabei konkret durch eine Variation des Rücklenkmomentes bzw. Lenkmomentes des Quer- oder Spurführungssystems.

Wird zum Beispiel die Fahrerbelastung in Abhängigkeit von einer Fahrstreifenbreite bestimmt, was insbesondere in Verbindung mit Nutzfahrzeugen vorteilhaft ist, da sie nur wenig seitlichen Spielraum zu den Fahrstreifenbegrenzungen haben und der Fahrer mit zunehmender Verengung des Fahrstreifens verstärkt gefordert wird, kann das Eingriffsverhalten der aktiven Lenkunterstützung direkt in Abhängigkeit von der Fahrstreifenbreite als Kenngröße für die Fahrerbelastung angepasst werden.

Fährt das Fahrzeug zum Beispiel auf einer breiten, gut ausgebauten Fernverkehrstraße, so wird der Fahrer nur gering beansprucht, zum Beispiel je nach Straßenbreite und Verlauf dergestalt, dass entweder eine mittlere, gewünschte Fahrerbelastung vorliegt, oder dass aufgrund einer sehr monotonen, sehr wenig belasteten Fahrsituation, eine geringe Fahrerbelastung vorliegt, die zu einer hohen Fahrerbeanspruchung führt. Im Falle einer festgestellten mittleren Fahrerbelastung wird dann vom Fahrerassistenzsystem die in der einzigen Figur dargestellte randzentrierte Lenkunterstützung vorgegeben, bei der vom Fahrerassistenzsystem nur in der Nähe der Fahrstreifenbegrenzungen 1 ein Lenkmoment ausgegeben wird, was durch die Bereiche 1a in dem Diagramm der randzentrierten Lenkunterstützung dargestellt ist. Befindet sich dagegen das Fahrzeug F im mittleren Bereich des Fahrstreifens FS, wie dies in der Figur dargestellt ist, wird kein Lenkmoment zur Verfügung gestellt. Das heißt, dass hier dann das Quer- oder Spurführungssystem nicht unterstützend eingreift.

Dies ist erst dann der Fall, wenn das Fahrzeug von der hier strichliert eingezeichneten Ideallinie 2 abweicht und mit seinen Randbereichen in den fahrstreifenbegrenzungsnahen Randbereich 1a eindringt.

Für den Fall, dass eine niedrige bzw. geringe Fahrerbelastung aufgrund einer hohen Fahrerbeanspruchung festgestellt wurde, ist vorgesehen, dass die Ideallinie, entlang der das Fahrzeug spurgeführt ist, innerhalb des Fahrstreifens in einem definierten Maße verlegt wird und/oder dass in Verbindung mit einem zusätzlich zu dem Quer- oder Spurführungssystem vorhandenem Längsführungssystem als Fahrerassistenzsystem der Abstand zum vorausfahrenden Fahrzeug in einem definierten Maße wiederholt verändert wird.

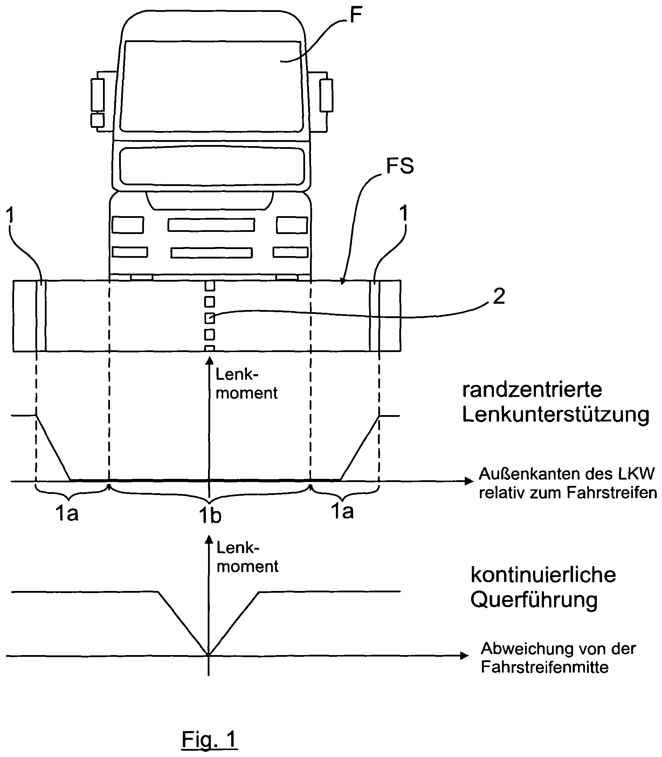

Anders stellt sich die Situation dar, wenn dem Fahrzeug nur eine geringe Fahrstreifenbreite zur Verfügung steht, was mit einer hohen Fahrerbeanspruchung und damit einer hohen Fahrerbelastung gleichgesetzt wird. Hier kann dann das Quer- oder Spurführungssystem durch die in der unteren Bildhälfte der Figur 1 dargestellte kontinuierliche Querführung über die gesamte Fahrstreifenbreite die präzise Spurführung merklich erleichtern und zum Beispiel Pendelbewegungen des Fahrzeugs reduzieren, was zum Beispiel anderen Verkehrsteilnehmern ein gefahrloses Überholen ermöglicht.

Ergänzend zur Fahrstreifenbreite kann zum Beispiel auch der Krümmungsverlauf eines Fahrschlauches sowie aus der Umgebungssensorik der umgebende Verkehr zur Beurteilung der Fahrsituation herangezogen werden. Häufigere, stärkere Krümmungen des Fahrschlauches ergeben zum Beispiel eine höhere Fahrerbelastung, ebenso wie eine höhere Anzahl an umgebenden Fahrzeugen sowie entsprechend dynamisches Fahrverhalten dieser Fahrzeuge zu einer höheren Fahrerbelastung führt bzw. als solche bewertet werden kann.

Aus dem eben geschilderten konkreten Beispiel ist gut ersichtlich, dass bei einer in Abhängigkeit von der Fahrerbelastung erfolgenden Vorgabe bzw. Adaption eines Aktivierungsschwellwertes eines Quer- oder Spurführungssystems, sichergestellt ist, dass bei jedem Unterstützungsgrad ein Abkommen von der Fahrbahn zuverlässig verhindert wird. Das Gleiche gilt im übertragenen Sinne für die Adaption des Aktivierungsschwellwertes auf der Basis eines Fahrerzustandes, was hier aber hier nicht mehr explizit dargestellt und erläutert wird.

## Patentansprüche

1. Verfahren zur Unterstützung eines Fahrers eines Fahrzeuges (F), insbesondere eines Kraft- oder Nutzfahrzeuges, bei dem wenigstens ein Fahrerassistenzsystem bei Erreichen eines definierten Aktivierungsschwellwertes in den Fahrbetrieb eingreift, insbesondere aktiv in den Fahrbetrieb eingreift,
wobei der Aktivierungsschwellwert des wenigstens einen Fahrerassistenzsystems und damit das Eingriffsverhalten desselben in Abhängigkeit von einer mittels einer Erkennungs- und/oder Auswerteeinrichtung erfassten Fahrerbelastung vorgegeben und/oder adaptiert wird;
wobei eine aktuelle, fahrerunabhängige Fahr- und/oder Verkehrssituation, insbesondere eine Fahrstreifenbreite und/oder ein Straßenverlauf und/oder eine Verkehrsdichte und/oder eine Verkehrsdynamik und/oder die Straßenbeschaffenheit und/oder die Tageszeit und/oder das Wetter, mittels der Erkennungs- und/oder Auswerteeinrichtung erfasst und eine Kenngröße für den Grad der Fahrerbelastung ermittelt wird, wobei der Aktivierungsschwellwert und damit das Eingriffsverhalten des wenigstens einen Fahrerassistenzsystems, insbesondere eines Quer- oder Spurführungssystems, in Abhängigkeit vom Grad der ermittelten Fahrerbelastung vorgegeben und/oder adaptiert wird;
wobei bei den Kenngrößen für den Grad der Fahrerbelastung wenigstens zwischen wenigstens einer unerwünschten Fahrerbelastung und einer erwünschten Fahrerbelastung unterschieden wird, dergestalt, dass bei einer unerwünschten Fahrerbelastung der Aktivierungsschwellwert für das Fahrerassistenzsystem jeweils so adaptiert wird, dass das wenigstens eine Fahrerassistenzsystem eine solche Unterstützung bewirkt, die eine Fahrerbelastung im erwünschten Bereich zur Folge hat;
**dadurch gekennzeichnet,**
**dass** das Fahrerassistenzsystem ein aktiv in den Fahrbetrieb eingreifendes Quer- oder Spurführungssystem ist, dessen auf die Lenkung des Fahrzeuges (F) wirkendes Lenkmoment in Abhängigkeit von der für den Grad der Fahrerbelastung ermittelten Kenngröße dergestalt adaptiert wird,
a) **dass** bei einer unerwünschten hohen Fahrerbelastung eine kontinuierliche Querführung über die gesamte Fahrstreifenbreite entlang einer definierten Ideallinie (2), erfolgt; und
b) **dass** bei einer erwünschten, vorzugsweise mittleren Fahrerbelastung nur eine bezogen auf die Fahrstreifenbreite randzentrierte Querführung erfolgt; und
c) **dass** bei einer festgestellten niedrigen Fahrerbelastung zur Erhöhung der Fahrerbelastung vorgesehen wird, dass die Ideallinie (2), entlang der das Fahrzeug (F) spurgeführt ist, innerhalb des Fahrstreifens (FS) in einem definierten Maße verlegt wird und/oder dass in Verbindung mit einem zusätzlich zu dem Quer- oder Spurführungssystem vorhandenem Längsführungssystem als Fahrerassistenzsystem der Abstand zum vorausfahrenden Fahrzeug (F) in einem definierten Maße wiederholt verändert wird.

2. Verfahren nach Anspruch 1, **dadurch gekennzeichnet, dass** der Fahrer von der bevorstehenden Maßnahme zur Erhöhung der Fahrerbelastung fahrzeugseitig mittels einer Informationseinrichtung informiert wird und/oder dass einem Fahrer, der von der bevorstehenden Maßnahme zur Erhöhung der Fahrerbelastung mittels einer fahrzeugseitigen Informationseinrichtung unterricht ist, mittels der Informationseinrichtung weiter eine Wahlmöglichkeit angeboten wird, durch entsprechende Befehlseingabe die zusätzliche Fahrerbelastung zu unterbinden und/oder zuzulassen.

3. Verfahren nach einem vorhergehenden Ansprüche, **dadurch gekennzeichnet, dass** der Aktivierungsschwellwert des wenigstens einen Fahrerassistenzsystems und damit das Eingriffsverhalten desselben in Abhängigkeit von einem mittels einer Erkennungs- und/oder Auswerteeinrichtung erfassten Fahrerzustand vorgegeben und/oder adaptiert wird

4. Verfahren nach Anspruch 3, **dadurch gekennzeichnet, dass** wenigstens ein das Fahrerverhalten des Fahrers und/oder den Fahrer selbst beeinflussender und/oder charakterisierender Parameter und/oder wenigstens ein vom Fahrer mittelbar oder unmittelbar beeinflussbarer Parameter als fahrerspezifische Messgröße mittels der Erkennungs- und/oder Auswerteeinrichtung erfasst und eine Kenngröße für den Fahrerzustand ermittelt wird, wobei der Aktivierungsschwellwert und damit das Eingriffsverhalten des wenigstens einen Fahrerassistenzsystems, insbesondere eines Quer- oder Spurführungssystems, in Abhängigkeit vom ermittelten Fahrerzustand vorgegeben und/oder adaptiert wird.

5. Verfahren nach Anspruch 4, **dadurch gekennzeichnet, dass** als Parameter das Lenkverhalten und/oder die Pedalbetätigung und/oder das Tastendruckverhalten und/oder das Spurverhalten und/oder die Blickrichtung des Fahrers und/oder die Kopfhaltung des Fahrers und/oder physiologische Fahrermesswerte und/oder die Fahrdauer und/oder die Pausendauer erfasst und ausgewertet werden.

6. Verfahren nach Anspruch 4 oder 5, **dadurch gekennzeichnet, dass** die den Fahrerzustand charakterisierende Kenngröße und die die Fahrerbelastung charakterisierende Kenngröße mittels der Erkennungs- und Auswerteeinrichtung in einem definierten Maße korreliert und eine gemeinsame Kenngröße ermittelt wird, anhand der der Aktivierungsschwellwert und damit das Eingriffsverhalten des wenigstens einen Fahrerassistenzsystems vorgegeben und/oder adaptiert wird.

7. Verfahren nach Anspruch 6, **dadurch gekennzeichnet, dass** bei einer insbesondere im Hinblick auf die Aufmerksamkeit und/oder die Vigilanz erfassten Verschlechterung eines erwünschten, definierten Fahrerzustandes vorgesehen wird, dass eine Ideallinie (2), entlang der das Fahrzeug (F) mittels eines Quer- oder Spurführungssystems als Fahrerassistenzsystem spurgeführt ist, innerhalb des Fahrstreifens (FS) in einem definierten Maße verlegt wird und/oder dass die Unterstützung durch das wenigstens eine Fahrerassistenzsystem in einem vorgegebenen Maße dergestalt reduziert wird, dass der Fahrer in einem verstärkten Maße aktiv in das Fahrgeschehen eingreifen muss.

8. Verfahren nach Anspruch 7, **dadurch gekennzeichnet, dass** der Fahrer von der bevorstehenden Maßnahme der Verlegung der Ideallinie (2) und/oder der Reduzierung der Fahrerunterstützung fahrzeugseitig mittels einer Informationseinrichtung informiert wird und/oder dass einem von der bevorstehenden Maßnahme mittels einer fahrzeugseitigen Informationseinrichtung unterrichteten Fahrer mittels der Informationseinrichtung weiter eine Wahlmöglichkeit angeboten wird, durch entsprechende Befehlseingabe die Verlegung der Ideallinie (2) und/oder die Reduzierung der Fahrerunterstützung zu unterbinden und/oder zuzulassen, und/oder dass dem Fahrer mittels einer Informationseinrichtung angezeigt wird, dass seine Leistungsfähigkeit abnimmt und/oder dass eine Pause einzulegen ist.

9. Verfahren nach Anspruch 7 oder 8, **dadurch gekennzeichnet, dass** in Verbindung mit einem Längsführungssystem als Fahrerassistenzsystem, insbesondere in Verbindung mit einem zusätzlich zu einem Quer- oder Spurführungssystem vorhandenem Längsführungssystem als Fahrerassistenzsystem, vorgesehen wird, den Abstand zum vorausfahrenden Fahrzeug (F) in einem definierten Maße wiederholt zu verändern.

10. Verfahren nach einem der vorhergehenden Ansprüche, **dadurch gekennzeichnet, dass** bei die Adaption des Aktivierungsschwellwertes durch eine Umschaltung stufenweise und/oder durch einen stetigen Übergang erfolgt.

## Claims

1. A method for supporting a driver of a vehicle (F), in particular of a motor vehicle or commercial vehicle, in which at least one driver assistance system intervenes in the driving operation, in particular actively intervenes in the driving operation, when a defined activation threshold value is reached,
wherein the activation threshold value of the at least one driver assistance system and thus the intervening behaviour of the same is predetermined and/or adapted dependent on a burden on the driver detected by a detection and/or evaluation device;
wherein a current, driver-independent driving and/or traffic situation, in particular a lane width and/or a road course and/or a traffic density and/or a traffic dynamic and/or the road condition and/or the time of day and/or the weather, is detected by the detection and/or evaluation device and a parameter for the degree of the burden on the driver is determined, wherein the activation threshold value and thus the intervening behaviour of the at least one driver assistance system, in particular of a lateral or lane guidance system, is predetermined and/or adapted dependent on the degree of the determined burden on the driver;
wherein a distinction is made in the parameters for the degree of the burden on the driver, at least between at least one undesired burden on the driver and a desired burden on the driver, such that, in the case of an undesired burden on the driver, the activation threshold value for the driver assistance system is adapted in each case such that the at least one driver assistance system effects such support that results in a burden on the driver in the desired range;
**characterised in that**
the driver assistance system is a lateral or lane guidance system which actively intervenes in the driving operation and whose steering torque acting on the steering of the vehicle (F) is adapted, dependent on the parameter determined for the burden on the driver, such that
a) in the event of an undesirably high burden on the driver, continuous lateral guidance takes place across the entire width of the lane along a defined ideal line (2); and
b) in the event of a desired, preferably medium burden on the driver, only edge-centred lateral guidance is provided in relation to the lane width; and
c) in the event of a determined low burden on the driver, in order to increase the burden on the driver, the ideal line (2) along which the vehicle (F) is lane-guided is shifted to a defined extent within the lane (FS) and/or the distance to the vehicle (F) in front is repeatedly changed to a defined extent in conjunction with a longitudinal guidance system, which is present in addition to the lateral or lane guidance system as a driver assistance system.

2. The method according to claim 1, **characterised in that** the driver is informed of the imminent measure to increase the burden on the driver by the vehicle by an information device and/or a driver who is informed of the imminent measure to increase the burden on the driver by a vehicle information device is further offered a choice by the information device to prevent and/or permit the additional burden on the driver by corresponding command input.

3. The method according to any one of the preceding claims, **characterised in that** the activation threshold value of the at least one driver assistance system and thus the intervening behaviour of the same is predetermined and/or adapted dependent on a driver state detected by a detection and/or evaluation device.

4. The method according to claim 3, **characterised in that** at least one parameter that influences and/or characterises the driver behaviour of the driver and/or the driver himself and/or at least one parameter that can be influenced directly or indirectly by the driver is detected as a driver-specific measure by the detection and/or evaluation device and a parameter for the driver state is determined, wherein the activation threshold value and thus the intervening behaviour of the at least one driver assistance system, in particular of a lateral or lane guidance system, is predetermined and/or adapted dependent on the determined driver state.

5. The method according to claim 4, **characterised in that** the steering behaviour and/or the pedal actuation and/or the button pressure behaviour and/or the lane behaviour and/or the driver's line of vision and/or the driver's head position and/or physiological driver measurements and/or the driving duration and/or the pause duration are detected and evaluated as parameters.

6. The method according to claim 4 or 5, **characterised in that** the parameter characterising the driver state and the parameter characterising the burden on the driver are correlated to a defined extent by the detection and evaluation device and a common parameter is determined, on the basis of which the activation threshold value and thus the intervening behaviour of the at least one driver assistance system is predetermined and/or adapted.

7. The method according to claim 6, **characterised in that,** in the event of a deterioration of a desired, defined driver state detected in particular with regard to attention and/or vigilance, it is provided that an ideal line (2), along which the vehicle (F) is lane-guided by a lateral or lane guidance system as driver assistance system within the lane (FS), is shifted to a defined extent and/or that the support provided by the at least one driver assistance system is reduced to a predetermined extent such that the driver must actively intervene in the driving situation to a greater extent.

8. The method according to claim 7, **characterised in that** the driver is informed of the imminent measure of shifting the ideal line (2) and/or reducing the driver assistance by the vehicle by an information device and/or **in that** a driver is informed of the imminent measure by a vehicle information device, is further offered a choice by the information device to prevent and/or permit the shifting of the ideal line (2) and/or the reducing of the driver assistance by a corresponding command input, and/or that the driver is informed by means of an information device that his performance is decreasing and/or that a break should be taken.

9. The method according to claim 7 or 8, **characterised in that,** in conjunction with a longitudinal guidance system as driver assistance system, in particular in conjunction with a longitudinal guidance system as driver assistance system present in addition to a lateral or lane guidance system, provision is made for repeatedly changing the distance to the vehicle (F) in front to a defined extent.

10. The method according to any one of the preceding claims, **characterised in that** the adaptation of the activation threshold value is carried out by a switchover in steps and/or by a continuous transition.

## Revendications

1. Procédé permettant d'assister un conducteur d'un véhicule (F), en particulier d'un véhicule automobile ou d'un véhicule utilitaire, dans lequel au moins un système d'assistance au conducteur intervient dans le fonctionnement de conduite, en particulier intervient activement dans le fonctionnement de conduite, lorsqu'une valeur seuil d'activation définie est atteinte,
dans lequel la valeur seuil d'activation dudit au moins un système d'assistance au conducteur, et donc le comportement d'intervention de celui-ci, est prédéfinie et/ou adaptée en fonction d'une sollicitation du conducteur détectée au moyen d'un dispositif de reconnaissance et/ou d'évaluation ;
dans lequel une situation de conduite et/ou de trafic actuelle, indépendante du conducteur, en particulier une largeur de voie de circulation et/ou un tracé de route et/ou une densité de trafic et/ou une dynamique de trafic et/ou la nature de la route et/ou l'heure de la journée et/ou la météo, sont détectés au moyen du dispositif de reconnaissance et/ou d'évaluation et une grandeur caractéristique est établie pour le degré de la contrainte du conducteur, dans lequel la valeur seuil d'activation, et donc le comportement d'intervention dudit au moins un système d'assistance au conducteur, en particulier d'un système de guidage transversal ou sur la voie, est prédéfinie et/ou adaptée en fonction du degré de la sollicitation du conducteur établie ;
dans lequel on distingue pour les grandeurs caractéristiques pour le degré de la sollicitation du conducteur au moins entre au moins une sollicitation du conducteur non souhaitée et une sollicitation du conducteur souhaitée de telle sorte que pour une sollicitation du conducteur non souhaitée, la valeur seuil d'activation pour le système d'assistance au conducteur est adaptée respectivement de telle sorte que ledit au moins un système d'assistance au conducteur provoque une assistance du type qui entraîne une sollicitation du conducteur dans la plage souhaitée ;
**caractérisé en ce que** le système d'assistance au conducteur est un système de guidage transversal ou sur la voie intervenant activement dans le fonctionnement de conduite et dont le couple de braquage agissant sur la direction du véhicule (F) est adapté en fonction de la grandeur caractéristique établie pour le degré de la sollicitation du conducteur de telle sorte
a) que dans le cas d'une sollicitation du conducteur élevée non souhaitée, un guidage transversal continu est effectué sur toute la largeur de voie de circulation le long d'une ligne idéale définie (2) ; et
b) que dans le cas d'une sollicitation du conducteur souhaitée, de préférence moyenne, seul un guidage transversal centré sur les bords par rapport à la largeur de voie de circulation est effectué ; et
c) que dans le cas d'une sollicitation du conducteur faible constatée, il est prévu pour augmenter la sollicitation du conducteur que la ligne idéale (2) le long de laquelle le véhicule (F) est guidée sur la voie soit déplacée à l'intérieur de la voie de circulation (FS) dans une mesure définie, et/ou qu'en relation avec un système de guidage longitudinal présent en plus du système de guidage transversal ou sur la voie en tant que système d'assistance au conducteur, la distance par rapport au véhicule (F) qui précède soit modifiée de manière répétée dans une mesure définie.

2. Procédé selon la revendication 1, **caractérisé en ce que** le conducteur est informé côté véhicule de la mesure imminente pour l'augmentation de la sollicitation du conducteur au moyen d'un dispositif d'information, et/ou en ce qu'un conducteur qui est informé de la mesure imminente pour l'augmentation de la sollicitation du conducteur au moyen d'un dispositif d'information côté véhicule se voit proposer au moyen du dispositif d'information en outre une option d'interdire et/ou d'autoriser la sollicitation du conducteur supplémentaire par une entrée de commande correspondante.

3. Procédé selon l'une quelconque des revendications précédentes, **caractérisé en ce que** la valeur seuil d'activation dudit au moins un système d'assistance au conducteur, et donc le comportement d'intervention de celui-ci, est prédéfinie et/ou adaptée en fonction d'un état du conducteur détecté au moyen d'un dispositif de reconnaissance et/ou d'évaluation.

4. Procédé selon la revendication 3, **caractérisé en ce qu'**au moins un paramètre influençant et/ou caractérisant le comportement de conduite du conducteur et/ou le conducteur lui-même et/ou au moins un paramètre pouvant être influencé indirectement ou directement par le conducteur sont détectés en tant que grandeur de mesure spécifique au conducteur au moyen du dispositif de reconnaissance et/ou d'évaluation, et une grandeur caractéristique est établie pour l'état du conducteur, dans lequel la valeur seuil d'activation, et donc le comportement d'intervention dudit au moins un système d'assistance au conducteur, en particulier d'un système de guidage transversal ou sur la voie, est prédéfinie et/ou adaptée en fonction de l'état du conducteur établi.

5. Procédé selon la revendication 4, **caractérisé en ce que** comme paramètre, le comportement de braquage et/ou l'actionnement de pédale et/ou le comportement d'une pression sur un bouton et/ou le comportement sur la voie et/ou la direction du regard du conducteur et/ou la posture de la tête du conducteur et/ou des valeurs de mesure de conducteur physiologiques et/ou la durée de déplacement et/ou la durée de pause sont détectés et évalués.

6. Procédé selon la revendication 4 ou 5, **caractérisé en ce que** la grandeur caractéristique caractérisant l'état du conducteur et la grandeur caractéristique caractérisant la sollicitation du conducteur sont mises en corrélation dans une mesure définie au moyen du dispositif de reconnaissance et d'évaluation, et une grandeur caractéristique commune est établie à l'aide de laquelle la valeur seuil d'activation, et donc le comportement d'intervention dudit au moins un système d'assistance au conducteur, est prédéfinie et/ou adaptée.

7. Procédé selon la revendication 6, **caractérisé en ce que** dans le cas d'une détérioration détectée, en particulier en ce qui concerne l'attention et/ou la vigilance, d'un état de conducteur défini souhaité, il est prévu qu'une ligne idéale (2) le long de laquelle le véhicule (F) est guidé sur la voie au moyen d'un système de guidage transversal ou sur la voie en tant que système d'assistance au conducteur soit décalée à l'intérieur de la voie de circulation (FS) dans une mesure définie, et/ou que l'assistance par ledit au moins un système d'assistance au conducteur soit réduite dans une mesure prédéfinie de telle sorte que le conducteur soit obligé dans une plus grande mesure d'intervenir activement dans la conduite.

8. Procédé selon la revendication 7, **caractérisé en ce que** le conducteur est informé côté véhicule au moyen d'un dispositif d'information de la mesure imminente du décalage de la ligne idéale (2) et/ou de la réduction de l'assistance au conducteur, et/ou **en ce qu'**un conducteur informé de la mesure imminente au moyen d'un dispositif d'information côté véhicule se voit proposer au moyen du dispositif d'information en outre une option d'interdire et/ou d'autoriser le décalage de la ligne idéale (2) et/ou la réduction de l'assistance au conducteur par une entrée de commande correspondante, et/ou **en ce qu'**un dispositif d'information indique au conducteur que ses performances diminuent et/ou qu'il convient de faire une pause.

9. Procédé selon la revendication 7 ou 8, **caractérisé en ce qu'**en liaison avec un système de guidage longitudinal en tant que système d'assistance au conducteur, en particulier en liaison avec un système de guidage longitudinal présent en plus d'un système de guidage transversal ou sur la voie en tant que système d'assistance au conducteur, il est prévu de modifier de manière répétée dans une mesure définie la distance par rapport au véhicule (F) qui précède.

10. Procédé selon l'une quelconque des revendications précédentes, **caractérisé en ce que** l'adaptation de la valeur seuil d'activation est effectuée par une commutation de manière progressive et/ou par une transition continue.
